# EUROPEAN PATENT SPECIFICATION

(11) **EP 1 037 832 B1**
(45) Date of publication and mention of the grant of the patent: **03.04.2002**
(21) Application number: 98934113.6
(22) Date of filing: 20.07.1998
(51) Int. Cl.: B65G 37/00, B65G 29/00, B65G 47/74, B65G 47/82

(54) **DEVICE AT AN ELEVATOR FOR SEPARATION OF BOARDS**
VORRICHTUNG FÜR EINEN AUFZUG ZUR TRENNUNG VON PLATTEN
ACCESSOIRE POUR DISPOSITIF DE LEVAGE DESTINE A SEPARER DES PLANCHES

(30) Priority: 22.07.1997 SE 9702766
(43) Date of publication of application: 27.09.2000
(73) Proprietor: Paris Trä & Metall AB, 640 33 Bettna (SE)
(72) Inventor: LÖVKVIST, Häkan, S-640 33 Bettna (SE)
(74) Representative: Johansson Webjörn, Ingmari
(86) International application number: SE9801399
(87) International publication number: WO9905051

(56) References cited:
- No further relevant documents have been disclosed.

## Description

### Technical Field

The present invention relates to a device at an elevator for the separation of boards from a magazine in which the elevator comprises a stand carrying two or more carrier chains. Each carrier chain runs partly over an upper pulley wheel and partly over a lower pulley wheel and shows carriers upon which the boards are lifted.

### Prior Art

Boards having been sawed in a saw mill usually are brought into a magazine from which they shall be lifted and separated by means of an elevator for further treatment. Such an elevator shows carrier chains driven by an electrical motor extending down into the magazine and provided with carrier fingers upon which the boards are lifted. Each board shows at least two parallel flat sides after the sawing and the width of each board now shall be measured and the board brought into an edging mill in order to get a desired width and an rectangular cross section of the board.

At feeding of the board into the edging mill each board is brought forward in its longitudinal direction by means of a feeding conveyor which can be combined with the width measuring device. The feeding conveyor in its turn is fed by a cross conveyor on which the boards are transported across their longitudinal direction from the elevator. The cross conveyor normally is fed from the elevator via distributing arms but can also be fed directly from the elevator.

If two or more boards are lifted together on the same row of carrier fingers on the elevator they must be separated before falling down upon the distributing arms or the cross conveyor. For that it must be possible to stop the motion of carrier chains of the elevator when the boards to be separated reach the top of the elevator and put away one board at a time from the carrier fingers. This can be done by stopping the drive motor for carrier chains, or breaking its connection with the carrier chains, and on the same time arrange a device for putting away the first of the boards. After a certain delay of time the carrier chains can be started again dropping the second board in the normal way upon the distributing arms or the cross conveyor. The stopping and starting of the drive motor can be made by hand by an operator or by means of a device indication if two or more boards are brought with on one row of carrier fingers.

### Description of the Invention

The object of the present invention is to achieve a device at an elevator for separation of boards from a magazine in which boards are put down in the same longitudinal direction but overlap one another in an orderly pile. The elevator according to the invention comprises a stand carrying two or more carrier chains, each carrier chain running partly over an upper pulley wheel, partly over a lower pulley wheel and showing carriers upon which the boards are lifted. Two or more acceleration devices are arranged at the top of the upper pulley wheels and showing acceleration members protruding over and above the motion path of the carriers and having a greater periphery speed than the speed of the carriers.

Preferably the acceleration devices consist of accelerating wheels that may be freely rotating on a first driving axle that also is arranged for driving the upper pulley wheels by means of a first motor. The accelerating wheels may preferably be driven via driving chains from a common second driving axle that is connected with a second driving motor. Each accelerating wheel shows preferably peripheral arranged teeth upon a diameter that is slightly above the outer path of the carrier chain when it passes over the upper pulley wheel, i.e. the teeth of the accelerating wheel protrude over and above the carriers at the upper pulley wheel. Furthermore the accelerating wheels rotate with a greater rotation speed than the pulley wheels whereby the teeth of the accelerating wheel get a greater peripheral speed than the carriers at the upper pulley wheels.

When boards that are fed from the magazine by means of the carriers reach the pulley wheels, their motion speed is increased by means of the accelerating wheels. This is utilised among other things to separate two boards that are lifted jointly onto a number of equally located carriers as the board first arriving at the accelerating wheels thereby quickly is put onto the cross conveyor meanwhile the following board arrives at the accelerating wheels.

In an alternate embodiment of the device according to the invention the acceleration devices may consist of driving chains that also may run over further pulley wheels on one or more axles parallel to the driving axles.

Further features and characteristics concerning the present invention are evident from the description to the drawings subsequently and from the claims.

### Description to the Drawings

The invention is described subsequently as an example of an embodiment in connection with the enclosed drawings.

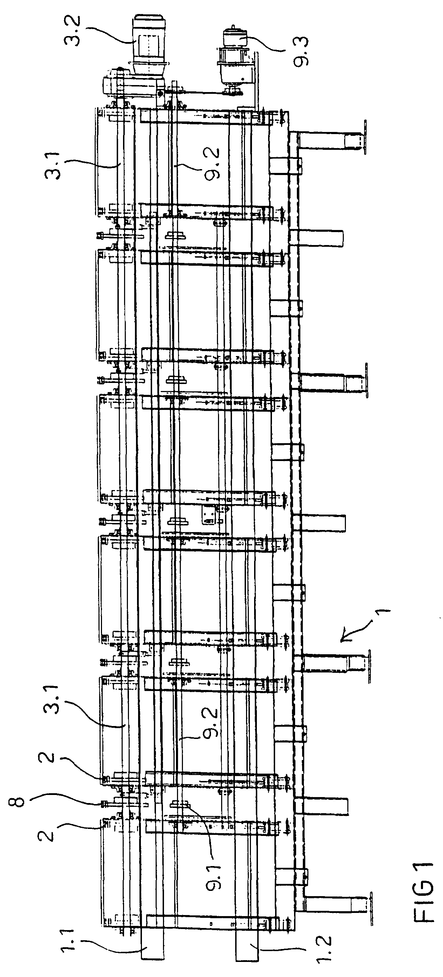

- Figure 1: shows an elevator for cross feed of boards seen from one long side.

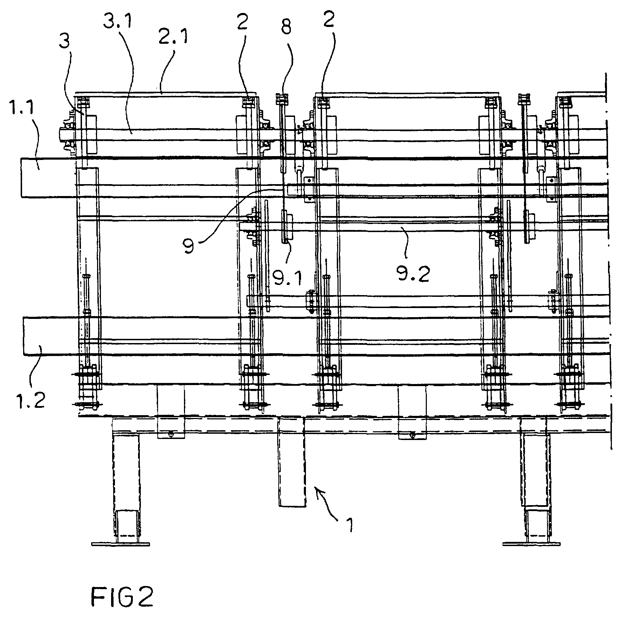

- Figure 2: shows magnified a section of the left end of the elevator according to figure 1.
- Figure 3: shows magnified a cross section through the elevator according to figure 1.

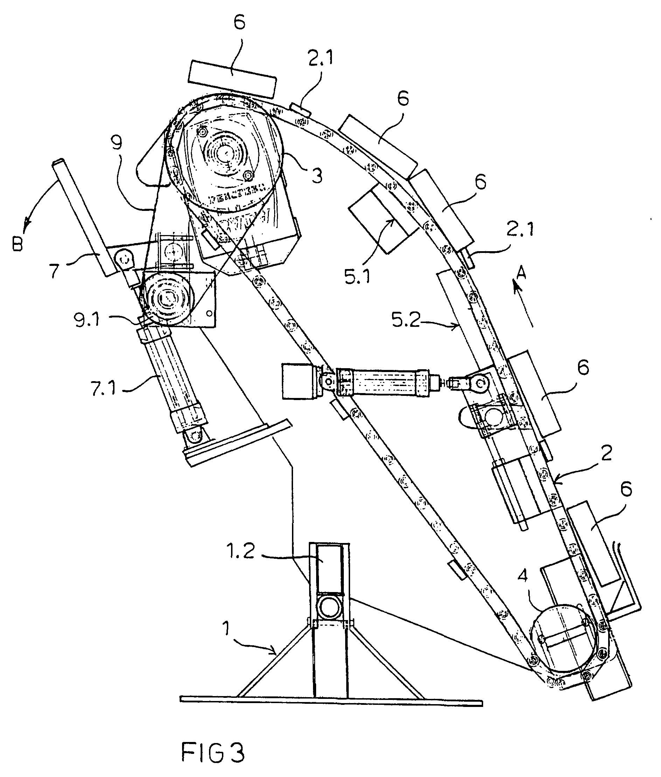

The elevator shown in the figures comprises a stand 1 placed upon a frame, for instance a floor in a sawmill. The stand 1 comprises an upper horizontal beam 1.1 and a lower horizontal beam 1.2 and carries a number of carrier chains 2 provided with carriers 2.1 running in planes transversely to the longitudinal direction of the elevator where each carrier chain 2 runs over an upper pulley wheel 3 and a lower pulley wheel 4 and via an upper sliding member 5.1 and a lower sliding member 5.2, both supporting the carrier chain 2. The upper pulley wheels 3 are driven by a first electric motor 3.2 via a driving axle 3.1 common to all pulley wheels 3. Boards 6 are distributed in the direction of arrow A in figure 3 from a magazine of boards at the lower end of the elevator, not shown in the figures, and up to a number of interacting distributing arms 7 from which one board at a time is placed upon a transverse conveyor for distribution to an edging saw mill. The distributing arms 7 are controlled by means of hydraulic cylinders 7.1 and lowered in the direction of arrow B in figure 3 when placing a board 6.

A number of accelerating wheels 8 are arranged freely rotating on the upper driving axle 3.1 and placed between two adjacent carrier chains 2. Each accelerating wheel 8 is driven via a driving chain 9, in its turn driven by a chain wheel 9.1 that is arranged power transmitting on a common lower driving axle 9.2 that in its turn is driven by a second electric motor 9.3. Each accelerating wheel 8 shows peripherally arranged teeth, placed on a diameter that slightly exceeds the outer path of the carrier chain 2 when passing over the outer pulley wheel 3, i.e. the teeth of the accelerating wheel 8 protrude over and above the carriers 2.1 at the upper pulley wheel 3. Also the accelerating wheels 8 rotate with a higher rotation speed than the pulley wheels 3 whereby the teeth on the accelerating wheel 8 get a higher periphery speed than the carriers 2.1 at the upper pulley wheels 3.

When boards 6 that are fed from the board magazine by means of the carriers 2.1 reach the pulley wheels 3 their motion speed is increased by means of the accelerating wheels 8. This is made use of among other things to separate two boards that are lifted together on a row of uniformly located carriers 2.1 and where the board that first reaches the accelerating wheels 8 in that way is thrown rapidly down onto the distributing arms 7 and placed upon the cross conveyor meanwhile the following board reaches the accelerating wheels 8.

It lies within the scope of the invention to replace the accelerating wheels 8, as described above, with tooth-provided chains with the same functioning, i.e. the driving chains 9, as described above, may be provided with teeth that protrude over and above the carriers 2.1 on the carrier chains 2. Those driving chains may also be arranged to run over an additional set of pulley wheels located along an additional axle parallel to the upper driving axle 3.1. By this it is made possible to additionally separate two adjacent boards that are taken up by a row of carriers 2.1 on the carrier chains 2.

It also lies within the scope of the invention to drive the carrier chains 2 via a lower driving axle, common for all lower pulley wheels 4, instead of an upper driving axle 3.1. The upper pulley wheels 3 are then free rotating like the accelerating wheels 8 or replaced with sliding devices but otherwise the same functioning concerning the acceleration and separation of the boards.

## Claims

1. Device at an elevator for separation of boards (6) from a magazine for putting down one board at a time upon a conveyor for distribution to an edging saw mill, the elevator comprising a stand (1) carrying two or more carrier chains (2), each carrier chain (2) running partly over an upper pulley wheel (3), partly over a lower pulley wheel (4) driven by a first motor (3.2), each carrier chain (2) showing carriers (2.1) upon which the boards (6) are lifted, **characterized in that** two or more acceleration devices (8) are arranged at the top of the upper pulley wheels (3) and driven by a second motor (9.3), the acceleration devices (8) showing acceleration members protruding over and above the motion path of the carrier chain (2) and that have a greater speed than the speed of the carrier chain (2), whereby boards (6) inadvertently being lifted together on a row of uniformly located carriers (2.1) can be separated by means of the acceleration devices (8).

2. Device according to claim 1, **characterized in that** interacting distribution arms (7) are arranged in connection with the acceleration devices (8) and lowered outwards from the elevator against the conveyor for distribution to the edging saw mill.

3. Device according to claim 1 or 2, **characterized in that** the acceleration devices consist of accelerating wheels (8) freely rotating on a first driving axle (3.1) for driving the upper pulley wheels (3).

4. Device according to claim 3, **characterized in that** the accelerating wheels (8) are driven via driving chains (9) from a common second driving axle (9.2).

5. Device according to claim 1 or 2, **characterized in that** the acceleration devices consist of driving chains (9).

6. Device according to claim 5, **characterized in that** the acceleration devices in the shape of driving chains (9) run over further pulley wheels on an axle parallel to the driving axles (3.1, 9.2).

## Patentansprüche

1. Vorrichtung an einem Aufzug zum Trennen von Platten (6) aus einem Magazin, um auf einem Förderer jeweils eine Platte zur Verteilung zu einer Besäumsäge abzusetzen, wobei der Aufzug aus einem zwei oder mehrere Trägerketten (2) tragenden Ständer (1) besteht, wobei jede Trägerkette (2) teils über eine obere Laufrolle (3), teils über eine von einem ersten Motor (3.2) angetriebene untere Laufrolle (4) läuft, wobei an jeder Trägerkette (2) Träger (2.1) zu sehen sind, auf denen die Platten (6) angehoben werden, **dadurch gekennzeichnet, daß** an der Oberseite der oberen Laufrollen (3) zwei oder mehrere, von einem zweiten Motor (9.3) angetriebene Beschleunigungsvorrichtungen (8) angeordnet sind, an denen Beschleunigungsglieder zu sehen sind, die über den Bewegungsweg der Trägerkette (2) hinaus vorstehen und eine Geschwindigkeit aufweisen, die größer ist als die Geschwindigkeit der Trägerkette (2), wodurch Platten (6), die unbeabsichtigt zusammen auf einer Reihe gleichförmig angeordneter Träger (2.1) angehoben werden, mit Hilfe der Beschleunigungsvorrichtungen (8) getrennt werden können.

2. , Vorrichtung nach Anspruch 1, **dadurch gekennzeichnet, daß** wechselwirkende Verteilarme (7) in Verbindung mit den Beschleunigungsvorrichtungen (8) angeordnet sind und von dem Aufzug nach außen gegen den Förderer zur Verteilung zu der Besäumsäge abgesenkt werden.

3. Vorrichtung nach Anspruch 1 oder 2, **dadurch gekennzeichnet, daß** die Beschleunigungsvorrichtungen aus sich an einer ersten Antriebsachse (3.1) frei drehenden Beschleunigungsrädern (8) zum Antreiben der oberen Laufrader (3) bestehen.

4. Vorrichtung nach Anspruch 3, **dadurch gekennzeichnet, daß** die Beschleunigungsräder (8) über Antriebsketten (9) von einer gemeinsamen zweiten. Antriebsachse (9.2) aus angetrieben werden.

5. Vorrichtung nach Anspruch 1 oder 2, **dadurch gekennzeichnet, daß** die Beschleunigungsvorrichtungen aus Antriebsketten (9) bestehen.

6. Vorrichtung nach Anspruch 5, **dadurch gekennzeichnet, daß** die Beschleunigungsvorrichtungen in Form von Antriebsketten (9) über weitere Laufräder auf einer Achse parallel zu den Antriebsachsen (3.1, 9.2) laufen.

## Revendications

1. Dispositif sur un élévateur pour la séparation de cartes (6) à partir d'un magasin pour les descendre une carte à la fois sur un convoyeur pour la distribution à une scie circulaire de découpage, l'élévateur comprenant un support (1) supportant deux ou davantage chaînes de transport (2), chaque chaîne de transport (2) cheminant partiellement sur une poulie supérieure (3), partiellement sur une poulie inférieure (4) entraînée par un premier moteur (3.2), chaque chaîne de transport (2) présentant des supports (2.1) sur lesquels les cartes (6) sont soulevées, **caractérisé en ce que** deux ou davantage dispositifs d'accélération (8) sont disposés au sommet des poulies supérieures (3) et entraînés par un second moteur (9.3), les dispositifs d'accélération (8) présentant des éléments d'accélération faisant saillie de l'autre côté et au-dessus du trajet de déplacement de la chaîne de transport (2) et qui a une vitesse supérieure à la vitesse de la chaîne de transport (2), par lequel les cartes (6) étant montées ensemble par inadvertance sur une rangée de supports (2.1) positionnés uniformément peuvent être séparés au moyen des dispositifs d'accélération (8).

2. Dispositif selon la revendication 1, **caractérisé en ce que** les bras de distribution en interaction (7) sont agencés en rapport avec les dispositifs d'accélération (8) et abaissés vers l'extérieur de l'élévateur contre le convoyeur pour distribution à la scie circulaire de découpage.

3. Dispositif selon les revendications 1 et 2, **caractérisé en ce que** les dispositifs d'accélération sont constitués par des roues accélératrices (8) tournant librement sur un premier essieu d'entraînement (3.1) pour entraîner les poulies supérieures (3).

4. Dispositif selon la revendication 3, **caractérisé en ce que** les roues accélératrices (8) sont entraînées par l'intermédiaire des chaînes de guidage (9) par un second axe de guidage commun (9.2).

5. Dispositif selon les revendications 1 et 2, **caractérisé en ce que** les dispositifs d'accélération sont constitués par les chaînes de guidage (9).

6. Dispositif selon la revendication 5, **caractérisé en ce que** les dispositifs d'accélération sous forme de chaînes de guidage (9) passent sur d'autres poulies sur un axe parallèle aux essieux d'entraînement (3.1, 9.2).
